# EUROPÄISCHE PATENTANMELDUNG

(11) **EP 4 371 824 A1**
(43) Veröffentlichungstag der Anmeldung: **22.05.2024**
(21) Anmeldenummer: 23198732.2
(22) Anmeldetag: 21.09.2023
(51) Int. Cl.: B60R 5/04, B60R 21/06

(54) **RAUMTRENNEINRICHTUNG UND KRAFTFAHRZEUG**

(30) Priorität: 18.11.2022 DE 102022212293
(71) Anmelder: Volkswagen Aktiengesellschaft, 38440 Wolfsburg (DE)
(72) Erfinder: Wehlauer, Udo, 38446 Wolfsburg (DE)

(57) **Zusammenfassung**

Die Erfindung betrifft eine Raumtrenneinrichtung (10) zur Unterteilung eines Innenraums eines Kraftfahrzeugs, mit einem Wandelement (11) und zumindest einem am Wandelement (11) befestigten Hakenelement (20) zur Einhängung in einer Hakenaufnahme (60), wobei das Hakenelement (20) ein freies Hakenende (21) und einen Verbindungsabschnitt (22) zur Verbindung des Hakenelements (20) mit dem Wandelement (11) umfasst, die in einer Anordnungsebene (30) verlaufen, wobei zumindest ein Längenbereich des Verbindungsabschnitts (22) im Querschnitt eine größere Erstreckung entlang der Anordnungsebene (31) aufweist als in diesem Querschnitt eine Erstreckung quer zur Anordnungsebene (32), und wobei der Verbindungsabschnitt (22) durch ein doppeltes Stangenmaterial (40) ausgebildet ist, deren beide Stangenelemente (41,42) in der Anordnungsebene (30) nebeneinander angeordnet sind.

Ferner betrifft die Erfindung ein Kraftfahrzeug mit der Raumtrenneinrichtung.

## Beschreibung

Die Erfindung betrifft eine Raumtrenneinrichtung und ein Kraftfahrzeug mit der Raumtrenneinrichtung.

Das Bedürfnis, Innenräume von Kraftfahrzeugen zu unterteilen, um zu verhindern, dass Gepäck oder auch transportierte Tiere in den Sitzbereich von Personen gelangen können, ist bekannt. Zu diesem Zweck existieren Trenneinrichtungen, wie zum Beispiel Netze, die zwischen der Rückenlehne der hinteren Sitzbank und dem Dachbereich eines Personenkraftwagens aufgespannt werden.

So offenbart die DE 10 2019 212 984 A1 eine Schutzvorrichtung, aufweisend ein flexibles Flächengebilde, das zwischen einer kompakt abgelegten Stauposition und einer wenigstens teilweise flächig aufgespannten Schutzposition verlagerbar ist, ein formstabiles Halteprofil, das an einem Stirnendbereich des flexiblen Flächengebildes befestigt ist, und zwei Halteelemente, die an einander gegenüberliegenden Stirnendbereichen des Halteprofils angeordnet und zur lösbaren Halterung an fahrzeugfesten Halteaufnahmen vorgesehen sind. Wenigstens eines der Halteelemente weist einen Schaft auf, der wenigstens abschnittsweise in einer Führungsaussparung des Halteprofils gelagert und in Axialrichtung der Führungsaussparung begrenzt beweglich ist, so dass das Halteelement relativ zu dem Halteprofil zwischen einer eingeschobenen ersten Haltestellung und einer ausgezogenen zweiten Haltestellung beweglich ist. Eine Formgebung der Führungsaussparung und eine Formgebung des Schaftes sind derart aufeinander abgestimmt, dass das Halteelement bei einer Bewegung zwischen der eingeschobenen ersten Haltestellung und der ausgezogenen zweiten Haltestellung zusätzlich zu der axialen Bewegung um eine senkrecht zur Axialrichtung der Führungsaussparung orientierte Schwenkachse schwenkbeweglich ist.

Die EP 0 997 351 A1 offenbart eine Trenn- und/oder Rückhaltevorrichtung z.B. für Kombinationskraftwagen, welche eine von einer Aufnahme-Halterung etwa vertikal ausziehbare Werkstoffbahn mit einer Haltestange aufweist, die zwei Haltestangen besitzt. Die Haltestange bildet im Bereich ihres Haltestangenendes einen rechteckigen Querschnitt, welcher zu einem Haken verformt ist. Der durch eine Rastöffnung hindurch gesteckte Haken hintergreift mit seiner Hakenfläche einen Trichterboden. Zur Verriegelung der Hakenfläche in einer Verriegelungsstellung durchgreift ein Riegelfortsatz einen vom Haken freigelassenen Teil der Rastöffnung. Auf diese Weise ist der Haken in seiner Verriegelungsstellung festgelegt.

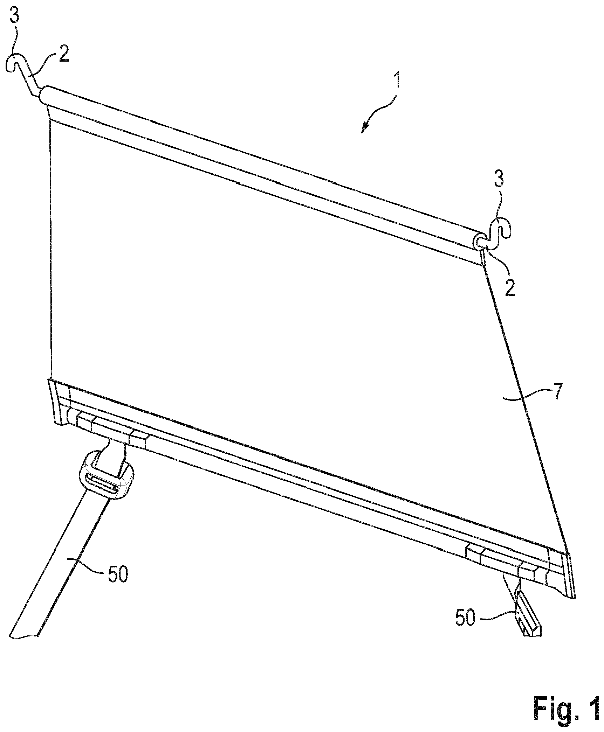

Eine weitere bekannte Ausführungsform sieht vor, dass eine Netztrennwand an einer starren durchlaufenden oberen Stange befestigt ist. Einfache aus einem Runddraht gefertigte Haken dienen zum beiderseitigen Einhängen der Netztrennwand, wie in Figur 1 ersichtlich.

Figur 1 zeigt eine herkömmliche Ausführungsform einer Netztrennwand 1 mit einer starren Stange 2. In Endbereichen der starren Stange 2 sind Haken 3 angeformt. Diese dienen zum Einhängen in hier nicht dargestellte Einhängelemente. Die starre Stange 2 trägt flexibles Material 7 der Netztrennwand, welches an der unteren Seite mittels mehrerer Befestigungseinrichtungen 50 befestigt und gespannt ist.

Durch die feste Anordnung der Haken 3 an der starren Stange 2 können sich die in einen karosseriefesten Haltebügel einzuhängenden Haken 3 nicht gegeneinander verdrehen, sodass sichergestellt ist, dass eine korrekte Einengung der Haken 3 erfolgen kann. Der karosseriefeste Haltebügel ist hinter einer teilverdeckenden Kunststoffblende angeordnet.

Nachteilig an dieser Ausführungsform ist jedoch, dass die obere, durchgehende Stange ein relativ hohes Gewicht aufweist und zudem einen relativ großen Bauraumbedarf, der sich insbesondere dann ungünstig bemerkbar macht, wenn die Netztrennwand im Kraftfahrzeug mitgeführt wird, aber nicht eingesetzt wird.

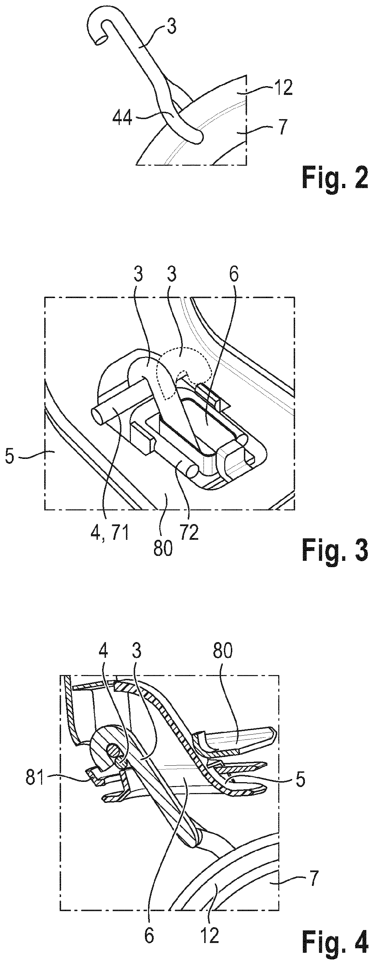

Entsprechend sieht eine weitere, bekannte Ausführungsform vor, dass eine verwendete Netztrennwand keine starre obere Stange aufweist, sondern die oberen Aufhängungen lediglich durch Haken realisiert sind, die flexibles Material der Netztrennwand halten. Eine derartige, in den Figuren 2-4 dargestellte Ausführungsform bedingt ein geringeres Gewicht und zudem mehr Flexibilität bei der Verstauung der Netztrennwand.

Figur 2 zeigt eine Ausführungsform, bei der der einzelne Haken 3 aus Rundmaterial jeweils eine Öse 44 ausbildet, durch die ein Rahmen 12 verläuft, der das flexible Material 7 der Netztrennwand trägt.

Figur 3 zeigt eine Situation beim Einhängen des Hakens 3. Es ist hier ersichtlich, dass nach Einfädeln des Hakens 3 in eine Öffnung 6 einer Kunststoffblende 5 der Haken 3 unterschiedliche Orientierungen aufweisen kann, wie zeichnerisch in Figur 3 angedeutet. Entsprechend kann es sein, dass der Haken 3 einen karosseriefest angeordneten Haltebügel 4 umgreift, oder aber derart verdreht wird, wie gestrichelt in Figur 3 dargestellt ist, und demzufolge nicht den Haltebügel 4 umgreift, sondern den Rand der Kunststoffblende 5.

Figur 4 zeigt eine korrekte Ausrichtung des Hakens 3.

Der vorliegenden Erfindung liegt die Aufgabe zugrunde, eine Raumtrenneinrichtung sowie ein damit ausgestattetes Kraftfahrzeug zur Verfügung zu stellen, die in einfach handhabbarer Weise und kostengünstig die Unterteilung von Innenräumen in einem Kraftfahrzeug ermöglichen.

Diese Aufgabe wird durch die Raumtrenneinrichtung nach Anspruch 1 sowie durch das Kraftfahrzeug nach Anspruch 6 gelöst. Vorteilhafte Ausführungsformen der Raumtrenneinrichtung sind in den Unteransprüchen 2 bis 5 angegeben. Vorteilhafte Ausführungsformen der Raumtrenneinrichtung sind in den Unteransprüchen 7 bis 10 angegeben.

Die Aufgabe wird erfindungsgemäß gelöst durch eine Raumtrenneinrichtung zur Unterteilung eines Innenraums eines Kraftfahrzeugs, mit einem Wandelement und zumindest einem am Wandelement befestigten Hakenelement zur Einhängung in einer Hakenaufnahme, wobei das Hakenelement ein freies Hakenende und einen Verbindungsabschnitt zur Verbindung des Hakenelements mit dem Wandelement umfasst, die in einer Anordnungsebene verlaufen. Zumindest ein Längenbereich des Verbindungsabschnitts weist im Querschnitt eine größere Erstreckung entlang der Anordnungsebene auf als in diesem Querschnitt eine Erstreckung quer zur Anordnungsebene. Der Verbindungsabschnitt ist durch ein doppeltes Stangenmaterial ausgebildet, deren beide Stangenelemente in der Anordnungsebene nebeneinander angeordnet sind.

Die Raumtrenneinrichtung dient z.B. zur Unterteilung eines Kofferraums oder auch zur räumlichen Trennung des Kofferraums von einem Fahrgastraum eines Kombinationskraftwagens oberhalb der letzten Rückenlehne.

Die Raumtrenneinrichtung kann auch als Rückhaltevorrichtung bezeichnet werden. Sie ist umfasst ein flexibles Flächengebilde, das zwischen einer kompakt abgelegten Stauposition und einer wenigstens teilweise flächig aufgespannten Schutzposition verlagerbar ist.

Das Wandelement kann ein flexibles Netzteil bzw. ein flexibles Flächengebilde sein, welches mit mehreren Hakenelementen und gegebenenfalls weiteren Befestigungseinrichtungen aufgespannt ist.

Die Hakenaufnahme ist Bestandteil des Kraftfahrzeugs und kann dabei an oder in einer Dachkonstruktion des Kraftfahrzeugs angeordnet sein, wobei die Dachkonstruktion auch den oberen Bereich wenigstens einer Türsäule umfassen kann.

Der Verbindungsabschnitt dient zur unmittelbaren oder mittelbaren Verbindung des Hakenelements mit dem Wandelement. Der Verbindungsabschnitt geht durch einen gebogenen oder abgewinkelten Bereich in das Hakenende über, welches sich mit zumindest einer seiner Komponenten seiner Längserstreckungsrichtung in entgegengesetzter Richtung wie der Verbindungsabschnitt in seiner Erstreckung ausgehend vom Wandelement erstreckt.

Die Körper des Hakenendes und des Verbindungsabschnittes verlaufen zwischen zwei zueinander parallelen Ebenen, wobei in der Mitte zwischen diesen beiden Begrenzungsebenen die Anordnungsebene verläuft.

Durch die beschriebene Dimensionierung des Verbindungsabschnitts erhält das Hakenelement um eine Achse quer zur Anordnungsebene ein erhöhtes axiales Flächenträgheitsmoment und entsprechend eine erhöhte Festigkeit.

Bei einer entsprechenden Dimensionierung der Hakenaufnahme am Kraftfahrzeug lässt sich zudem dadurch verhindern, dass das Hakenelement in einer falschen Ausrichtung eingegangen wird.

Die Ausführung des Verbindungsabschnitts durch ein doppeltes Stangenmaterial ermöglicht in kostengünstiger und einfacher Weise die Ausbildung des Hakenelements.

Das Stangenmaterial kann beispielsweise Rundmaterial bzw. ein Runddraht sein, welcher in doppelter Anordnung in einem kritischen Bereich einen unrunden Querschnitt erzeugt.

In alternativer Ausführungsform kann statt eines Runddrahts auch ein Material mit rechteckigem oder ovalen/elliptischem Querschnitt eingesetzt werden, der letztendlich ebenfalls eine Verdrehsicherung des Hakenelements bewirkt.

Das Hakenelement kann zumindest bereichsweise gehärtet sein. Dabei ist das freie Hakenende und/ oder der Verbindungsabschnitt gehärtet. Die Härtung kann eine Randhärtung sein, wie z.B. eine Randschichthärtung, die lediglich in einem äußeren Bereich des Hakenelements eine Härtung bewirkt, und ein Kernbereich nicht gehärtet wird. Mit der Härtung kann auch eine Festigkeitserhöhung, insbesondere eine Erhöhung der Zugfestigkeit, des Hakenelements bzw. seines gehärteten Bereichs einhergehen. Damit wird erreicht, dass das Hakenelement über eine lange Lebensdauer eine ausreichende Verschleißfestigkeit als auch Zugfestigkeit aufweist, um dauerhaft das Wandelement zu halten. Beispielsweise kann die Zugfestigkeit des Hakenelements zumindest an einem der beiden Bestandteile Hakenende und Verbindungsabschnitt auf Grund der Härtung zwischen 250 N/mm² und 350 N/mm² , wie z.B. 300 N/mm² betragen. In diesem Bereich kann der Durchmesser eines im Querschnitt rund ausgestalteten Hakenendes bzw. Verbindungsabschnitts zwischen 6 mm und 10 mm wie z.B. 8 mm betragen.

Die beiden Stangenelemente können miteinander verschweißt sein. Die Schweißverbindung sichert die vorgesehene Anordnung der Stangenelemente nebeneinander und trägt dadurch zur Erhöhung der Festigkeit bei.

Die Schweißverbindung kann dabei vor oder nach der Härtung ausgeführt werden.

Des Weiteren können die beiden Stangenelemente Bestandteile einer gemeinsamen Stange sein, die im Verbindungsbereich der beiden Stangenelemente eine Öse ausbildet. Entsprechend ist die Herstellung des Hakenelements in einfacher Weise möglich, indem eine längliche Stange derart gebogen wird, dass sie eine Öse ausbildet, und die freien Stangenenden das doppelte Stangenmaterial ausbilden.

Die Biegung der Öse kann dabei vor oder nach der Härtung ausgeführt werden.

Durch die Öse kann ein Rahmen des Wandelements verlaufen. Der Rahmen kann z.B. ein Drahtrahmen zur Aufspannung eines Netzes oder eines Textils sein.

Dadurch lässt sich in einfacher Weise das Wandelement festhalten und zudem sicherstellen, dass das Wandelement bei korrekter Einengung des Hakenelements bereits im Wesentlichen in der vorgesehenen End-Ausrichtung positioniert ist, bei gleichzeitiger Gewährung eines gewissen Spiels des Hakenelements aus der Ebene des Wandelements heraus, um ein manuelles Einhängen zu erleichtern.

Die Öse kann bereichsweise auf dem Rahmen verschiebbar sein und/ oder um einen Abschnitt des Rahmens herum schwenkbar sein.

Ein weiterer Aspekt der Erfindung ist ein Kraftfahrzeug, welches eine Dachkonstruktion mit zumindest einer Hakenaufnahme und eine beschriebene Raumtrenneinrichtung umfasst. Das Kraftfahrzeug kann ein zumindest teilweise elektrisch antreibbarer Personenkraftwagen sein.

Die Dachkonstruktion kann auch den oberen Bereich wenigstens einer Türsäule des Kraftfahrzeugs umfassen. Die Raumtrenneinrichtung kann dabei bereits an der Hakenaufnahme befestigt sein, oder in nicht befestigter Weise zur Verfügung gestellt werden.

Die Hakenaufnahme kann eine längliche Aufnahmeöffnung zur Einführung des Hakenelements sowie ein Einhängelement aufweisen, welches sich quer zur Längsrichtung der Aufnahmeöffnung erstreckt und zum Einhängen des Hakenelements dient, wobei die Aufnahmeöffnung quer zur Längsrichtung eine geringere Weite aufweist als die Erstreckung des Verbindungsabschnitts des Hakenelements entlang der Anordnungsebene.

Damit ist gewährleistet, dass keine Verdrehung des Hakenelements innerhalb der Aufnahmeöffnung stattfinden kann und demzufolge keine unbeabsichtigte, verdrehte Einhängung des Hakenelements und demzufolge auch keine unzulässige Belastung des Hakenelements, des Wandelements und/ oder der Hakenaufnahme bzw. der die Hakenaufnahme tragenden Dachkonstruktion.

Des Weiteren ist dadurch abgesichert, dass das Hakenelement nicht unbeabsichtigter Weise nach Einführung in die Kunststoffblende quer zu seiner Sollorientierung ausgerichtet ist und fälschlicherweise in die Kunststoffblende eingehangen wird.

Entsprechend wird dadurch eine Scheinverrastung verhindert und demzufolge eine Fehlfunktion und damit einhergehend eine Verletzungsgefahr für Kraftfahrzeug-Insassen verringert bzw. ausgeschlossen.

Im eingehängten Zustand des Hakenelements in der Hakenaufnahme kann sich das Wandelement entlang der Längsrichtung der Aufnahmeöffnung erstrecken. Eine das Wandelement montierende Person erhält somit aus der Ausrichtung der Aufnahmeöffnung eine Information, entlang welcher Richtung das Wandelement anzuordnen ist.

Weiterhin kann das Einhängelement ein Querstangenelement aufweisen, welches in das Hakenelement im eingehängten Zustand eingreift, und/ oder das Einhängelement kann ein Verstärkungs-Stangenelement aufweisen, welches sich bereichsweise um die Aufnahmeöffnung herum erstreckt. Damit wird eine Verteilung der vom Hakenelement in das Einhängelement aufgebrachten Kraft bewirkt, nämlich auf das Querstangenelement und gleichzeitig auch auf das Verstärkungs-Stangenelement, welches gewährleistet, dass ein vom Hakenelement aufgebrachte mechanischen Belastung des Einhängelements nicht zu einem vorzeitigen Verschleiß der Aufnahmeöffnung führt.

Das Querstangenelement und das Verstärkungs-Stangenelement können aneinander fixiert sein. Diese Fixierung kann durch Schweißung realisiert sein, wodurch die eingebrachten Kräfte noch sicherer auf das Einhängelement und das Querstangenelement verteilt werden.

Die Erfindung wird im Folgenden anhand der in den beiliegenden Zeichnungen dargestellten Ausführungsbeispiele erläutert.

Es zeigen
Figur 1: eine herkömmliche Ausführungsform einer Netztrennwand mit einer starren Stange,
Figur 2: eine weitere herkömmliche Ausführungsform mit einzelnem Haken,
Figur 3: der in Figur 2 dargestellte Haken in unterschiedlichen Ausrichtungen beim Einhängevorgang,
Figur 4: der in Figur 2 dargestellte Haken im eingehängten Zustand,

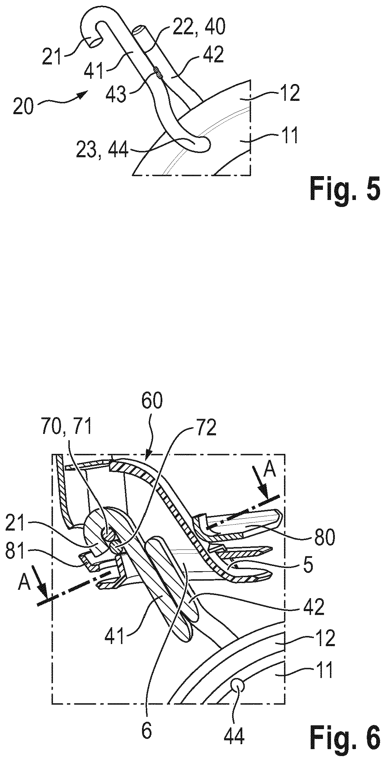

Figur 5: einen Teilbereich der Raumtrenneinrichtung mit erfindungsgemäß ausgestaltetem Hakenelement,
Figur 6: das in Figur 5 dargestellte Hakenelement im eingehängten Zustand,

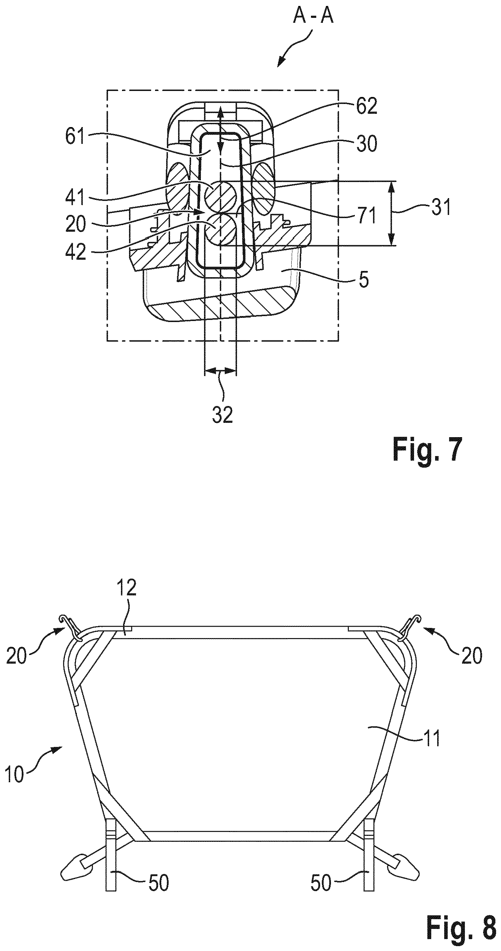

Figur 7: das in Figur 5 dargestellte Hakenelement in Schnittansicht entlang des in Figur 6 angedeuteten Schnittverlaufs, und
Figur 8: eine erfindungsgemäß ausgestaltete Raumtrenneinrichtung.

Auf die Figuren 1 bis 4 ist bereits zur Erläuterung des Standes der Technik eingegangen worden.

Figur 5 zeigt einen Teilbereich der Raumtrenneinrichtung mit erfindungsgemäß ausgestaltetem Hakenelement 20. Es ist ersichtlich, dass das Hakenelement 20 ein freies Hakenende 21 aufweist sowie einen Verbindungsabschnitt 22, der zur Verbindung des freien Hakenendes 21 mit dem Wandelement 11 der Raumtrenneinrichtung dient. Der Verbindungsabschnitt 22 ist über einen gebogenen Bereich 23 mit dem freien Hakenende 21 verbunden.

Der Verbindungsabschnitt 22 ist durch doppeltes Stangenmaterial 40 ausgebildet, welches ein 1. Stangenelement 41 und ein 2. Stangenelement 42 umfasst, die Bestandteile einer gemeinsamen Stange sind, die eine Öse 44 ausbildet, durch die ein Rahmen 12, der durch einen Draht ausgebildet sein kann, der das flexible Wandelement 11 aufgespannt, hindurchführt. Das 1. Stangenelement 41 und das 2. Stangenelement 42 sind mittels einer Schweißnaht 43 fest miteinander verbunden.

Figur 7 zeigt das Hakenelement 20 im eingehängten Zustand. Hier befindet sich das Hakenelement 20 in einer Hakenaufnahme 60, welche Bestandteil des Kraftfahrzeuges ist. Die Hakenaufnahme 60 bildet eine Aufnahmeöffnung 61 aus, in der sich der Verbindungsabschnitt 22 befindet. Des Weiteren ist ein Einhängelement 70 vorhanden, welches der Einhängung des Hakenelements 20 dient. Das Einhängelement 70 ist über ein Verbindungselement 81 fest mit einer Dachkonstruktion 80 des Kraftfahrzeugs verbunden.

Figur 7 zeigt das in Figur 5 dargestellte Hakenelement 20 in Schnittansicht entlang des in Figur 6 angedeuteten Schnittverlaufs. Hier ist deutlich ersichtlich, dass das 1. Stangenelement 41 und das 2. Stangenelement 42 in einer Anordnungsebene 30 angeordnet sind. Das Hakenelement 20 hat somit in seiner Erstreckung entlang der Anordnungsebene 31 ein größeres Maß als in seiner Erstreckung quer zur Anordnungsebene 32. Dies bewirkt, dass sich das Hakenelement 20 in der Aufnahmeöffnung 61 nicht verdrehen kann und somit eine zuverlässige Einhängung des Hakenelements 20 auf einem Querstangenelement 71 des Einhängelements 70, welches quer zur Längsrichtung 62 der Aufnahmeöffnung 61 verläuft, gewährleistet ist.

Das Querstangenelement 71 kann hier wie in der den Stand der Technik beschreibenden Figur 3 auch noch mit einer Verstärkungs-Stangenelement 72 fest verbunden sein.

Figur 8 zeigt eine erfindungsgemäß ausgestaltete Raumtrenneinrichtung 10, welche das flächenartige Wandelement 11 umfasst, an deren oberen Eckbereichen die Hakenelement 20 am Rahmen 12 angeordnet sind, wobei hier ersichtlich ist, dass der Rahmen 12 in den Eckbereichen durch Verstärkungselemente ausgeführt ist. In den unteren Eckpunkten ist die Raumtrenneinrichtung 10 durch weitere Befestigungseinrichtungen 50 befestigt bzw. gespannt.

### Bezugszeichenliste

- 1: Netztrennwand
- 2: starre Stange
- 3: Haken
- 4: Haltebügel
- 5: Kunststoffblende
- 6: Öffnung der Kunststoffblende
- 7: flexibles Material der Netztrennwand
- 10: Raumtrenneinrichtung
- 11: Wandelement
- 12: Rahmen
- 20: Hakenelement
- 21: freies Hakenende
- 22: Verbindungsabschnitt
- 23: gebogener Bereich
- 30: Anordnungsebene
- 31: Erstreckung entlang der Anordnungsebene
- 32: Erstreckung quer zur Anordnungsebene
- 40: doppeltes Stangenmaterial
- 41: erstes Stangenelement
- 42: zweites Stangenelement
- 43: Schweißnaht
- 44: Öse
- 50: Befestigungseinrichtung
- 60: Hakenaufnahme
- 61: Aufnahmeöffnung
- 62: Längsrichtung der Aufnahmeöffnung
- 70: Einhängelement
- 71: Querstangenelement
- 72: Verstärkungs-Stangenelement
- 80: Dachkonstruktion
- 81: Verbindungselement

## Patentansprüche

1. Raumtrenneinrichtung (10) zur Unterteilung eines Innenraums eines Kraftfahrzeugs, mit einem Wandelement (11) und zumindest einem am Wandelement (11) befestigten Hakenelement (20) zur Einhängung in einer Hakenaufnahme (60), wobei das Hakenelement (20) ein freies Hakenende (21) und einen Verbindungsabschnitt (22) zur Verbindung des Hakenelements (20) mit dem Wandelement (11) umfasst, die in einer Anordnungsebene (30) verlaufen, wobei zumindest ein Längenbereich des Verbindungsabschnitts (22) im Querschnitt eine größere Erstreckung entlang der Anordnungsebene (31) aufweist als in diesem Querschnitt eine Erstreckung quer zur Anordnungsebene (32), **dadurch gekennzeichnet, dass** der Verbindungsabschnitt (22) durch ein doppeltes Stangenmaterial (40) ausgebildet ist, deren beide Stangenelemente (41,42) in der Anordnungsebene (30) nebeneinander angeordnet sind.

2. Raumtrenneinrichtung nach Anspruch1, **dadurch gekennzeichnet, dass** das Hakenelement (20) zumindest bereichsweise gehärtet ist.

3. Raumtrenneinrichtung nach einem der Ansprüche 1 und 2, **dadurch gekennzeichnet, dass** die beiden Stangenelemente (41,42) miteinander verschweißt sind.

4. Raumtrenneinrichtung nach einem der Ansprüche 1 bis 3, **dadurch gekennzeichnet, dass** die beiden Stangenelemente (41,42) Bestandteile einer gemeinsamen Stange sind, die im Verbindungsbereich der beiden Stangenelemente (41,42) eine Öse (44) ausbildet.

5. Raumtrenneinrichtung nach Anspruch 4, **dadurch gekennzeichnet, dass** durch die Öse (44) ein Rahmen (12) des Wandelements (11) verläuft.

6. Kraftfahrzeug, umfassend eine Dachkonstruktion (80) mit zumindest einer Hakenaufnahme (60) und eine Raumtrenneinrichtung (10) gemäß einem der Ansprüche 1 bis 5.

7. Kraftfahrzeug nach Anspruch 6, **dadurch gekennzeichnet, dass** die Hakenaufnahme (60) eine längliche Aufnahmeöffnung (61) zur Einführung des Hakenelements (20) sowie ein Einhängelement (70) aufweist, welches sich quer zur Längsrichtung der Aufnahmeöffnung (62) erstreckt und zum Einhängen des Hakenelements (20) dient, wobei die Aufnahmeöffnung (61) quer zur Längsrichtung eine geringere Weite aufweist als die Erstreckung des Verbindungsabschnitts (22) des Hakenelements (20) entlang der Anordnungsebene (31).

8. Kraftfahrzeug nach einem der Ansprüche 6 und 7, **dadurch gekennzeichnet, dass** sich im eingehängten Zustand des Hakenelements (20) in der Hakenaufnahme (60) das Wandelement (11) entlang der Längsrichtung der Aufnahmeöffnung (62) erstreckt.

9. Kraftfahrzeug nach einem der Ansprüche 6 bis 8, **dadurch gekennzeichnet, dass** das Einhängelement (70) ein Querstangenelement (71) aufweist, welches in das Hakenelement (20) im eingehängten Zustand eingreift.

10. Kraftfahrzeug nach einem der Ansprüche 6 bis 9, **dadurch gekennzeichnet, dass** das Einhängelement (70) ein Verstärkungs-Stangenelement (72) aufweist, welches sich bereichsweise um die Aufnahmeöffnung (61) herum erstreckt.
